# EUROPEAN PATENT APPLICATION

(11) **EP 4 842 039 A1**
(43) Date of publication of application: **18.11.2026**
(21) Application number: 24916205.8
(22) Date of filing: 01.03.2024
(51) Int. Cl.: H04W 24/02

(54) **COMMUNICATION METHOD, AND DEVICE AND STORAGE MEDIUM**

(30) Priority: 12.01.2024 CN 202410052316
(71) Applicant: Beijing Xiaomi Mobile Software Co., Ltd., Beijing 100085 (CN)
(72) Inventor: LI, Mingju, Beijing 100085 (CN); CHEN, Bo, Beijing 100085 (CN)
(74) Representative: Stöckeler, Ferdinand
(86) International application number: PCT/CN2024/079755
(87) International publication number: WO 2025/148144

(57) **Abstract**

The embodiments of the present disclosure relate to a communication method, and a device and a storage medium. The method comprises: receiving first information sent by a network device, wherein the first information is information corresponding to a first function, the first function is used for executing beam prediction, and the first function is an artificial intelligence (AI) model and/or an AI function; and on the basis of the first information, acquiring data required by the first function, wherein the first information comprises at least one of the following: a first identifier, the first identifier corresponding to the first function, and the first identifier comprising at least one of a function identifier, a model identifier, a data set identifier, a data collection configuration identifier, a data collection identifier, a condition identifier and an additional condition identifier; and a data collection objective, the data collection objective comprising at least one of model training, model reasoning and performance monitoring, and the content of the first information corresponding to different data collection objectives being different. In this way, information corresponding to a first function can be flexibly configured, thereby improving the management efficiency of the first function.

## Description

### CROSS-REFERENCE TO RELATED APPLICATIONS

This application claims priority to and benefits of Chinese Patent Application No. 202410052316.9, filed in the China National Intellectual Property Administration (CNIPA) on January 12, 2024, and titled "communication method, and device and storage medium", the entire content of which is incorporated herein by reference.

### FIELD

The present disclosure relates to the field of communication technology, and particularly to a communication method, a device, and a storage medium.

### BACKGROUND

With the development of communication technology, an artificial intelligence (AI)-based prediction function has been introduced into a wireless communication system. Such prediction function may be an AI function and/or an AI model, through which prediction data under certain scenarios may be obtained, thereby improving the performance of network.

### SUMMARY

Embodiments of the present disclosure provide a communication method, a device, and a storage medium.

According to a first aspect of the embodiments of the present disclosure, there is provided a communication method, performed by a terminal, including:
receiving first information sent by a network device, in which the first information corresponds to a first function, the first function is configured to perform beam prediction, and the first function is an artificial intelligence (AI) model and/or an AI function; and
collecting data required by the first function according to the first information, in which the first information includes at least one of:
a first identifier, in which the first identifier corresponds to the first function, and the first identifier includes at least one of a function identifier, a model identifier, a dataset identifier, a data collection configuration identifier, a data collection identifier, a condition identifier, or an additional condition identifier; or
a data collection purpose, in which the data collection purpose includes at least one of model training, model inference, or performance monitoring, and different contents of the first information correspond to different data collection purposes, respectively.

According to a second aspect of the embodiments of the present disclosure, there is provided a communication method, performed by a network device, including:
sending first information to a terminal, in which the first information corresponds to a first function, the first function is configured to perform beam prediction, the first function is an artificial intelligence (AI) model and/or an AI function, and the first information is configured to instruct the terminal to collect data required by the first function according to the first information.

The first information includes at least one of:
a first identifier, in which the first identifier corresponds to the first function, and the first identifier includes at least one of a function identifier, a model identifier, a dataset identifier, a data collection configuration identifier, a data collection identifier, a condition identifier, or an additional condition identifier; or
a data collection purpose, in which the data collection purpose includes at least one of model training, model inference, or performance monitoring, and different contents of the first information correspond to different data collection purposes, respectively.

According to a third aspect of the embodiments of the present disclosure, there is provided a terminal, including:
a first transceiver module, configured to receive first information sent by a network device, in which the first information corresponds to a first function, the first function is configured to perform beam prediction, and the first function is an artificial intelligence (AI) model and/or an AI function; and
a first processing module, configured to collect data required by the first function according to the first information, in which the first information includes at least one of:
a first identifier, in which the first identifier corresponds to the first function, and the first identifier includes at least one of a function identifier, a model identifier, a dataset identifier, a data collection configuration identifier, a data collection identifier, a condition identifier, or an additional condition identifier; or a data collection purpose, in which the data collection purpose includes at least one of model training, model inference, or performance monitoring, and different contents of the first information corresponding to different data collection purposes, respectively.

According to a fourth aspect of the embodiments of the present disclosure, there is provided a network device, including:
a second transceiver module, configured to send first information to a terminal, in which the first information corresponds to a first function, the first function is configured to perform beam prediction, the first function is an artificial intelligence (AI) model and/or an AI function, and the first information is configured to instruct the terminal to collect data required by the first function according to the first information, in which the first information includes at least one of: a first identifier, in which the first identifier corresponds to the first function, and the first identifier includes at least one of a function identifier, a model identifier, a dataset identifier, a data collection configuration identifier, a data collection identifier, a condition identifier, or an additional condition identifier; or a data collection purpose, in which the data collection purpose includes at least one of model training, model inference, or performance monitoring, and different contents of the first information corresponding to different data collection purposes, respectively.

According to a fifth aspect of the embodiments of the present disclosure, there is provided a communication device, including one or more processors. The communication device is configured to perform the communication method described in optional implementations in the first aspect or the second aspect.

According to a sixth aspect of the embodiments of the present disclosure, there is provided a storage medium having stored thereon instructions that, when executed on a communication device, cause the communication device to perform the communication method described in optional implementations in the first aspect or the second aspect.

According to a seventh aspect of the embodiments of the present disclosure, there is provided a communication system, including a terminal and a network device. The terminal is configured to perform the communication method described in optional implementations in the first aspect. The network device is configured to perform the communication method described in optional implementations in the second aspect.

The technical solutions in the embodiments of the present disclosure may include the following beneficial effects. The first information sent by the network device is received, in which the first information corresponds to the first function, the first function is configured to perform the beam prediction, and the first function is the AI model and/or the AI function. The data required by the first function is collected according to the first information, in which the first information includes at least one of the first identifier or a data collection purpose. The first identifier corresponds to the first function, and the first identifier includes at least one of the function identifier, the model identifier, the dataset identifier, the data collection configuration identifier, the data collection identifier, the condition identifier, or the additional condition identifier. The data collection purpose includes at least one of the model training, the model inference, or the performance monitoring, and different contents of the first information correspond to different data collection purposes, respectively. In this way, the information corresponding to the first function may be flexibly configured, and the management efficiency of the first function is improved.

As can be appreciated, the above general description and the following detailed description are for illustrative purposes only, but shall not be construed as limiting the scope of the present disclosure.

### BRIEF DESCRIPTION OF THE DRAWINGS

In order to illustrate the technical solutions of the embodiments of the present disclosure in a clearer manner, the drawings required for the description of the embodiments will be described hereinafter. The following drawings merely relate to some embodiments of the present disclosure, but shall not be construed as limiting the scope of the present disclosure.
FIG. 1 is a schematic diagram illustrating an architecture of a communication system according to an embodiment of the present disclosure.
FIG. 2 is a schematic interactive diagram of a communication method according to an embodiment of the present disclosure.
FIG. 3 is a schematic diagram illustrating a first pattern according to an embodiment of the present disclosure.
FIG. 4 is a schematic diagram illustrating a second pattern according to an embodiment of the present disclosure.
FIG. 5 is a schematic flowchart of a communication method according to an embodiment of the present disclosure.
FIG. 6 is a schematic flowchart of a communication method according to an embodiment of the present disclosure.
FIG. 7 is a schematic flowchart of a communication method according to an embodiment of the present disclosure.
FIG. 8 is a block diagram of a terminal according to an embodiment of the present disclosure.
FIG. 9 is a block diagram of a network device according to an embodiment of the present disclosure.
FIG. 10 is a schematic structural diagram of a communication device according to an embodiment of the present disclosure.

### DETAILED DESCRIPTION

Embodiments of the present disclosure provide a communication method, a device, and a storage medium.

In a first aspect, an embodiment of the present disclosure provides a communication method, performed by a terminal, including:
receiving first information sent by a network device, in which the first information corresponds to a first function, the first function is configured to perform beam prediction, and the first function is an artificial intelligence (AI) model and/or an AI function; and
collecting data required by the first function according to the first information.

In the above embodiment, the information corresponding to the first function may be flexibly configured to improve the management efficiency of the first function.

According to some of the aforementioned embodiments of the first aspect, the first information includes at least one of:
a first identifier, in which the first identifier corresponds to the first function; or
a data collection purpose, in which the data collection purpose indicates a function of the data obtained through the first information.

According to some of the aforementioned embodiments of the first aspect, the first information further includes at least one of:
a second identifier, in which the second identifier corresponds to a configuration related to a measurement, and the measurement is configured for data collection;
beam information, in which the beam information indicates information related to beams for a measurement and/or prediction;
a use case, in which the use case is a case applying the first function to perform the beam prediction;
reference signal resource information, in which the reference signal resource information is configured to determine a first beam and/or a second beam, the first beam is a beam corresponding to an input value of the first function, and the second beam is a beam corresponding to an output value of the first function;
coverage information, in which the coverage information indicates information related to a coverage of the network device;
terminal distribution information, in which the terminal distribution information indicates a distribution of a plurality of terminals within a coverage of the network device; or
measurement information, in which the measurement information includes information related to a measurement performed by the terminal based on the first information.

In the above embodiment, the information required by the first function may be determined through any one of the first information, which improves the flexibility of the terminal in configuring the information related to the first function.

According to some of the aforementioned embodiments of the first aspect, the use case includes at least one of:
a spatial domain beam prediction case;
a time domain beam prediction case; or
a spatial domain beam prediction case and a time domain beam prediction case.

In the above embodiment, the use case may control the first information to be applied to the spatial domain and/or time domain beam prediction cases, thereby to better adapt to different scenarios.

According to some of the aforementioned embodiments of the first aspect, the reference signal resource information includes at least one of:
a first reference signal resource set, in which reference signal resources in the first reference signal resource set correspond to the first beam;
a second reference signal resource set, in which reference signal resources in the second reference signal resource set correspond to the second beam;
a set relationship, in which the set relationship includes a relationship between a first reference signal resource set and a second reference signal resource set;
time information corresponding to a first reference signal resource set;
time information corresponding to a second reference signal resource set; or
a time pattern, in which the time pattern is a pattern formed by a time instance corresponding to a first reference signal resource set and a time instance corresponding to a second reference signal resource set.

In the above embodiment, the reference signal resource information related to the first function may be flexibly determined.

According to some of the aforementioned embodiments of the first aspect, the set relationship includes:
the first reference signal resource set being a subset of the second reference signal resource set;
the first reference signal resource set being different from the second reference signal resource set, in which a beam corresponding to the first reference signal resource set is a wide beam, and a beam corresponding to the second reference signal resource set is a narrow beam; or
the first reference signal resource set being the same as the second reference signal resource set.

In the above embodiment, the set relationship between the first reference signal resource set and the second reference signal resource set may be flexibly determined.

According to some of the aforementioned embodiments of the first aspect, the time pattern includes:
a first pattern, in which the first pattern indicates N historical periods and M future periods, and measurement results of the N historical periods are used by the terminal to obtain prediction results of the M future periods based on the first function; or
a second pattern, in which the second pattern indicate K historical periods, and measurement results of the K historical periods are used by the terminal to obtain L prediction results within a (K+1)^{th} future period based on the first function.

In the above embodiment, a time relationship between the first reference signal resource set and the second reference signal resource set may be flexibly determined via the time pattern.

According to some of the aforementioned embodiments of the first aspect,
the coverage information includes a deployment type and/or an inter-site distance of the network device; and/or
the terminal distribution information includes a ratio of indoor terminals to outdoor terminals.

In the above embodiment, the coverage information and/or the terminal distribution information may be flexibly indicated, such that the terminal collects the data according to the information.

According to some of the aforementioned embodiments of the first aspect, the measurement information includes at least one of:
a measurement quantity, in which the measurement quantity includes layer 1 reference signal received power (L1-RSRP) and/or layer 1 signal to interference plus noise ratio (L1-SINR);
event information, in which the event information is information related to an event that triggers a measurement reporting; or
a reporting quantity, in which the reporting quantity indicates information reported by the terminal to the network device.

In the above embodiment, the measurement information may be flexibly indicated, such that the terminal collects the data according to the measurement information.

According to some of the aforementioned embodiments of the first aspect, the reporting quantity includes a performance metric of the first function, and the performance metric includes at least one of:
prediction accuracy, in which the prediction accuracy is a probability that predicted best reference signal resources include an actual best reference signal resource, the predicted best reference signal resources are best reference signal resources obtained through prediction by the first function, the actual best reference signal resource is a best reference signal resource obtained through an actual measurement by the terminal, and the best reference signal resources are top N reference signal resources with a maximum L1-RSRP or L1-SINR in a second reference signal resource set, in which N is a positive integer; or
a signal strength difference, in which the signal strength difference is a difference between a predicted signal strength and an actual signal strength.

In the above embodiment, the reporting quantity may be flexibly indicated, such that the terminal collects the data according to the reporting quantity.

According to some of the aforementioned embodiments of the first aspect, the first identifier includes at least one of:
a function identifier;
a model identifier;
a dataset identifier;
a data collection configuration identifier;
a data collection identifier;
a condition identifier; or
an additional condition identifier.

According to some of the aforementioned embodiments of the first aspect, in response to at least one of the first identifiers being the same, the first information corresponds to the same first function.

In the above embodiment, the first identifier may be flexibly indicated, such that the terminal determines the first function corresponding to the first information based on the first identifier.

According to some of the aforementioned embodiments of the first aspect, the second identifier includes at least one of:
a measurement identifier;
a measurement object identifier; or
a report identifier.

In the above embodiment, the second identifier may be flexibly indicated, such that the terminal determines the information related to the measurement based on the second identifier.

According to some of the aforementioned embodiments of the first aspect, the beam information includes at least one of:
a beam codebook identifier, in which the beam codebook identifier indicates codebook information used by the network device for sending a beam;
an antenna configuration identifier, in which the antenna configuration identifier indicates antenna configuration information of the network device; or
a beam type, in which the beam type indicates a type of a beam sent by the network device.

In the above embodiment, the beam information may be flexibly indicated, such that the terminal determines the information related to the beam.

According to some of the aforementioned embodiments of the first aspect, the data collection purpose includes at least one of:
model training;
model inference; or
performance monitoring.

According to some of the aforementioned embodiments of the first aspect, different contents of the first information correspond to different data collection purposes, respectively.

In the above embodiment, the data collection purpose may be flexibly indicated, such that the terminal determines the data collection purpose, and flexibly collects corresponding data according to the data collection purpose.

In a second aspect, an embodiment of the present disclosure provides a communication method, performed by a network device, including:
sending first information to a terminal, in which the first information corresponds to a first function, the first function is configured to perform beam prediction, the first function is an artificial intelligence (AI) model and/or an AI function, and the first information is configured to instruct the terminal to collect data required by the first function according to the first information.

In the above embodiment, the information corresponding to the first function may be flexibly configured to improve the management efficiency of the first function.

According to some of the aforementioned embodiments of the second aspect, the first information includes at least one of:
a first identifier, in which the first identifier corresponds to the first function; or
a data collection purpose, in which the data collection purpose indicates a function of the data obtained through the first information.

According to some of the aforementioned embodiments of the second aspect, the first information further includes at least one of:
a second identifier, in which the second identifier corresponds to a configuration related to a measurement, and the measurement is configured for data collection;
beam information, in which the beam information indicates information related to beams for a measurement and/or prediction;
a use case, in which the use case is a case applying the first function to perform the beam prediction;
reference signal resource information, in which the reference signal resource information is configured to determine a first beam and/or a second beam, the first beam is a beam corresponding to an input value of the first function, and the second beam is a beam corresponding to an output value of the first function;
coverage information, in which the coverage information indicates information related to a coverage of the network device;
terminal distribution information, in which the terminal distribution information indicates a distribution of a plurality of terminals within a coverage of the network device; or
measurement information, in which the measurement information includes information related to a measurement performed by the terminal based on the first information.

According to some of the aforementioned embodiments of the second aspect, the use case includes at least one of:
a spatial domain beam prediction case;
a time domain beam prediction case; or
a spatial domain beam prediction case and a time domain beam prediction case.

According to some of the aforementioned embodiments of the second aspect, the reference signal resource information includes at least one of:
a first reference signal resource set, in which reference signal resources in the first reference signal resource set correspond to the first beam;
a second reference signal resource set, in which reference signal resources in the second reference signal resource set correspond to the second beam;
a set relationship, in which the set relationship includes a relationship between a first reference signal resource set and a second reference signal resource set;
time information corresponding to a first reference signal resource set;
time information corresponding to a second reference signal resource set; or
a time pattern, in which the time pattern is a pattern formed by a time instance corresponding to a first reference signal resource set and a time instance corresponding to a second reference signal resource set.

According to some of the aforementioned embodiments of the second aspect, the set relationship includes:
the first reference signal resource set being a subset of the second reference signal resource set;
the first reference signal resource set being different from the second reference signal resource set, in which a beam corresponding to the first reference signal resource set is a wide beam, and a beam corresponding to the second reference signal resource set is a narrow beam; or
the first reference signal resource set being the same as the second reference signal resource set.

According to some of the aforementioned embodiments of the second aspect, the time pattern includes:
a first pattern, in which the first pattern indicates N historical periods and M future periods, and measurement results of the N historical periods are used by the terminal to obtain prediction results of the M future periods based on the first function; or
a second pattern, in which the second pattern indicate K historical periods, and measurement results of the K historical periods are used by the terminal to obtain L prediction results within a (K+1)^{th} future period based on the first function.

According to some of the aforementioned embodiments of the second aspect,
the coverage information includes a deployment type and/or an inter-site distance of the network device; and/or
the terminal distribution information includes a ratio of indoor terminals to outdoor terminals.

According to some of the aforementioned embodiments of the second aspect, the measurement information includes at least one of:
a measurement quantity, in which the measurement quantity includes layer 1 reference signal received power (L1-RSRP) and/or layer 1 signal to interference plus noise ratio (L1-SINR);
event information, in which the event information is information related to an event that triggers a measurement reporting; or
a reporting quantity, in which the reporting quantity indicates information reported by the terminal to the network device.

According to some of the aforementioned embodiments of the second aspect, the reporting quantity includes a performance metric of the first function, and the performance metric includes at least one of:
prediction accuracy, in which the prediction accuracy is a probability that predicted best reference signal resources include an actual best reference signal resource, the predicted best reference signal resources are best reference signal resources obtained through prediction by the first function, the actual best reference signal resource is a best reference signal resource obtained through an actual measurement by the terminal, and the best reference signal resources are top N reference signal resources with a maximum L1-RSRP or L1-SINR in a second reference signal resource set, in which N is a positive integer; or
a signal strength difference, in which the signal strength difference is a difference between a predicted signal strength and an actual signal strength.

According to some of the aforementioned embodiments of the second aspect, the first identifier includes at least one of:
a function identifier;
a model identifier;
a dataset identifier;
a data collection configuration identifier;
a data collection identifier;
a condition identifier; or
an additional condition identifier.

According to some of the aforementioned embodiments of the second aspect, in response to at least one of the first identifiers being the same, the first information corresponds to the same first function.

According to some of the aforementioned embodiments of the second aspect, the second identifier includes at least one of:
a measurement identifier;
a measurement object identifier; or
a report identifier.

According to some of the aforementioned embodiments of the second aspect, the beam information includes at least one of:
a beam codebook identifier, in which the beam codebook identifier indicates codebook information used by the network device for sending a beam;
an antenna configuration identifier, in which the antenna configuration identifier indicates antenna configuration information of the network device; or
a beam type, in which the beam type indicates a type of a beam sent by the network device.

According to some of the aforementioned embodiments of the second aspect, the data collection purpose includes at least one of:
model training;
model inference; or
performance monitoring.

According to some of the aforementioned embodiments of the second aspect, different contents of the first information correspond to different data collection purposes, respectively.

In a third aspect, an embodiment of the present disclosure provides a terminal, which may include a first transceiver module and a first processing module. The terminal may be configured to perform the optional implementations of the first aspect.

In a fourth aspect, an embodiment of the present disclosure provides a network device, which may include a second transceiver module. The network device may be configured to perform the optional implementations of the second aspect.

In a fifth aspect, an embodiment of the present disclosure provides a communication device, which may include one or more processors. The communication device may be configured to perform the optional implementations of the first aspect or the second aspect.

In a sixth aspect, an embodiment of the present disclosure provides a storage medium having stored thereon instructions that, when executed on a communication device, cause the communication device to perform the method described in the optional implementations of the first aspect or the second aspect.

In a seventh aspect, an embodiment of the present disclosure provides a program product, which when executed by a communication device, causes the communication device to perform the method described in the optional implementations of the first aspect or the second aspect.

In an eighth aspect, an embodiment of the present disclosure provides a computer program which, when run on a computer, causes the computer to perform the method described in the optional implementations of the first aspect or the second aspect.

In a ninth aspect, an embodiment of the present disclosure provides a chip or a chip system. The chip or chip system includes a processing circuit configured to perform the method described in the optional implementations of the first aspect or the second aspect.

In a tenth aspect, an embodiment of the present disclosure proposes a communication system, which may include a terminal and a network device. The terminal is configured to perform the method described in the optional implementations of the first aspect, and the network device is configured to perform the method described in the optional implementations of the second aspect.

As can be appreciated, the terminal, network device, communication device, communication system, storage medium, program product, computer program, chip or chip system are all used to execute the method in the embodiments of the present disclosure. Therefore, the beneficial effects that may be achieved may refer to the beneficial effects in the corresponding method, and thus the description thereof is omitted herein.

Embodiments of the present disclosure provide a communication method, a device, and a storage medium. In some embodiments, terms such as communication method and method for processing information may be used interchangeably; terms such as communication device and apparatus for processing information, communication apparatus may be used interchangeably; and terms such as system for processing information and communication system may be used interchangeably.

The embodiments of the present disclosure are not exhaustive, but are merely illustrative of some embodiments, and are not intended to be a specific limitation on the scope of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of the steps in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In each embodiment of the present disclosure, unless otherwise specified and in case of no logical conflict, the terms and/or descriptions among the embodiments are consistent and may be referenced to each other, and technical features in different embodiments may be combined to form new embodiments according to their intrinsic logical relationships.

The terms used in the embodiments of the present disclosure are for the purpose of describing specific embodiments only, and are not intended to limit the present disclosure.

In the embodiments of the present disclosure, unless otherwise specified, elements represented in the singular form, such as "a", "an", "the", "above", "said", "preceding", "this", and the like, may represent "one and only one", or may represent "one or more", "at least one", and the like. For example, in a case where an article such as "a", "an", and "the", in English is used in translation, a noun after the article may be understood as a singular expression or a plural expression.

In the embodiments of the present disclosure, "a plurality of" refers to two or more.

In some embodiments, terms such as "at least one of", "one or more", "a plurality of", "multiple", may be used interchangeably.

In some embodiments of the present disclosure, expressions such as "at least one of A or B", "A and/or B", "A in one case and B in another", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

In some embodiments of the present disclosure, expressions such as "A or B" may include the following technical solutions depending on the situation: in some embodiments A (A is executed regardless of B); in some embodiments B (B is executed regardless of A); in some embodiments, execution is selected from A and B (A and B are selectively executed). The same applies when there are more branches such as A, B, and C.

The prefix words such as "first" and "second" in embodiments of the present disclosure are only for distinguishing different description objects, and do not impose limitations on the position, order, priority, quantity, content, etc. of the described objects. For description of the described objects, please refer to the description of the context in the claims or the embodiments, and should not constitute unnecessary restrictions due to the use of the prefix words. For example, if the described object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the described object is "rank", the ordinal number before "rank" in "first rank" and "second rank" does not limit the priority between "rank". For another example, the number of described objects is not limited by ordinal numbers, and may be one or more. Taking "first device" as an example, the number of "devices" may be one or more. Furthermore, objects modified by different prefixes may be the same or different, for example, if the described object is the "device", the "first device" and the "second device" may be the same device or different devices, and the types thereof may be the same or different. For another example, when the described object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to", "in response to determining", "in a case where", "when", "upon", "if", and the like may be used interchangeably.

In some embodiments, terms such as "greater than", "greater than or equal to", "not smaller than", "more than", "more than or equal to", "not lower than", "higher", "higher than or equal to", "not less than", "above" and the like may be used interchangeably, and terms such as "smaller than", "smaller than or equal to", "not greater than", "less than", "less than or equal to", "not more than", "lower than", "lower than or equal to", "not higher than", "below" and the like may be used interchangeably.

In some embodiments, the apparatus may be interpreted as physical or virtual, and the names thereof are not limited to those described in embodiments, and may also be understood as "apparatus", "equipment", "device", "circuit", "network element", "node", "function", "unit", "section", "system", "network", "chip", "chip system", "entity", "body" and the like in some cases.

In some embodiments, the "network" may be interpreted as an apparatus included in the network, for example, an access network device, a core network device and the like.

In some embodiments, the network device may include at least one of an access network device or a core network device.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell" "carrier", "component carrier", "bandwidth part (BWP)" and the like may be used interchangeably.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be used interchangeably.

In some embodiments, an access network device, a core network device, or a network device may be replaced by a terminal. For example, embodiments of the present disclosure may also be applied to structures where communication between an access network device, a core network device, or a network device and a terminal is replaced by communication between multiple terminals (e.g., device-to-device (D2D), vehicle-to-everything (V2X), etc.). In this case, the terminal may also have all or part of the functions of the access network device. In addition, terms such as "uplink", "downlink" and the like may also be replaced by terms corresponding to inter-terminal communication (e.g., "side"). For example, terms such as uplink channel, downlink channel and the like may be replaced by sidelink channel; terms such as uplink, downlink and the like may be replaced by sidelink.

In some embodiments, a terminal may be replaced by an access network device, a core network device, or a network device. In this case, the access network device, core network device, or network device may also have all or part of the functions of the terminal.

In some embodiments, the names of information and the like are not limited to the names recorded in the embodiments. Terms such as "information", "message", "signal", "signaling", "report", "configuration", "indication", "instruction", "command", "channel", "parameter", "field", "field", "symbol", "symbol", "codebook", "codeword", "codepoint", "bit", "data", "program", "chip" and the like may be used interchangeably.

In some embodiments, obtaining data, information and the like may comply with laws and regulations of the country where it is located.

In some embodiments, data, information and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

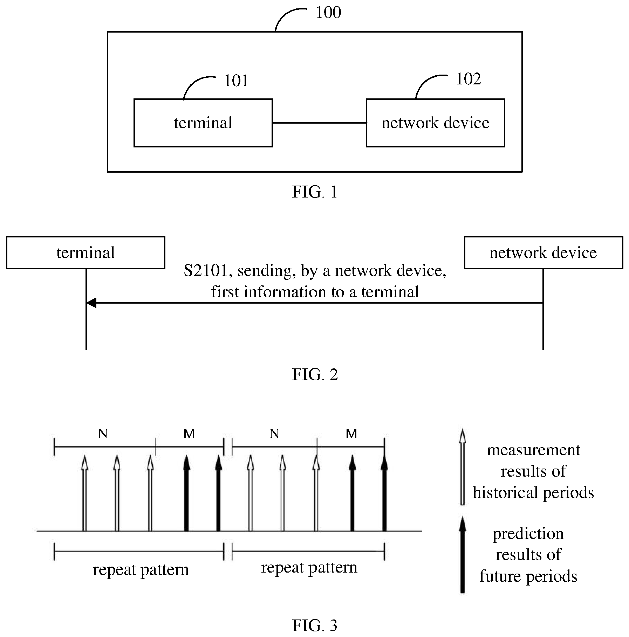

FIG. 1 is a schematic diagram illustrating an architecture of a communication system according to an embodiment of the present disclosure. As shown in FIG. 1, a communication system 100 includes a terminal 101 and a network device 102.

In some embodiments, the terminal 101 may include at least one of, but is not limited to: a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home.

In some embodiments, the network device 102 may include at least one of: an access network device or a core network device.

In some embodiments, the access network device is, for example, a node or device that accesses a terminal to a wireless network, and the access network device may include at least one of, but is not limited to: an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system.

In some embodiments, the technical solutions of the present disclosure may be applied to an Open RAN architecture. Moreover, an interface between or within the access network device according to embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but is not limited thereto.

In some embodiments, the core network device may be one device, or may be a plurality of devices or a group of devices. The core network may include at least one of an evolved packet core (EPC), a 5G core network (5GCN), or a next generation core (NGC).

As can be appreciated, the communication system described in embodiments of the present disclosure is to more clearly explain the technical solution of embodiments of the present disclosure, and does not constitute a limitation on the technical solution provided by the embodiments of the present disclosure. As those skilled in the art know, with the evolution of the system architecture and the emergence of new business scenarios, the technical solutions provided by the embodiments of the present disclosure is applicable to similar technical problems.

The following embodiments of the present disclosure may be applied to the communication system 100 illustrated in FIG. 1 or a part of the entities, but is not limited thereto. The entities shown in FIG. 1 are illustrative, and the communication system may include all or part of the entities shown in FIG. 1, or other entities other than those shown in FIG. 1. The number and form of the entities are arbitrary, each entity may be physical or virtual, the connection relationship between the entities is an example, the entities may not be connected or connected, and the connection may be any form, including direct connection or indirect connection, wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

In some embodiments of the present disclosure, the above communication system may support beam-based sending and receiving. The beam-based sending and receiving may better align desired signals with corresponding terminals, and avoid interference to other terminals caused by the leakage of signal energy, which may improve the signal-to-interference-plus-noise ratio, and enhance the coverage performance of the wireless communication system.

For example, in a communication system, such as in NR communication, for a frequency range 2 (FR2) communication band, due to the fast attenuation of high-frequency channels, the beam-based sending and receiving may be adopted to ensure the coverage range.

In some embodiments, the network device may configure a reference signal resource set for beam measurement. The terminal may measure reference signal resources in the reference signal resource set, and report IDs of X reference signal resources with relatively high signal quality in a measurement result, as well as L1-RSRP and/or L1-SINR of each of the X reference signal resources. The reference signal resource set configured by the network device includes the X reference signal resources, and the X reference signal resources correspond to different transmit beams of the network device, respectively. For each of the reference signal resources, the terminal needs to measure the reference signal resource through all receiving beams, determine beam measurement qualities respectively corresponding to the receiving beams, and determine the highest beam measurement quality from the multiple beam measurement qualities. In the above measurement process, if a quantity of transmit beams of the network device is M and a quantity of receiving beams of the terminal is N, a quantity of beam pairs that the terminal needs to measure is M*N.

In some embodiments, terms such as "beam", "beam pair", "beam width", "beam angular degree", "antenna", "antenna element", "antenna port", "antenna port group", "panel", "layer", "the number of layers", "rank", "resource", "resource set", "resource group", "Quasi-Colocation (QCL) Type D", "spatial setting", "spatial filter", "spatial relation info", "spatial RX parameters", "spatial Tx parameter", "transmission configuration indication (TCI) state" and the like may be used interchangeably.

In some embodiments of the present disclosure, the above communication system may support a first function, and the first function may be configured to perform beam prediction.

In some embodiments, the first function may be an AI function and/or an AI model.

In some embodiments, one AI function may correspond to one or more AI models. For example, one AI function may be a function or module implemented jointly by multiple AI models. Different AI models may correspond to different conditions or additional conditions.

In other embodiments, one AI model may correspond to one or more AI functions.

In further embodiments, the AI function and the AI model may be in one-to-one correspondence.

In some embodiments, the first function may be deployed on the terminal and/or the network device.

In some embodiments, the name of the first function is not specified. For example, it may be "AI function", "AI model", "AI module", "prediction function", "prediction model", "prediction module" and so on.

In some embodiments, the terminal and/or the network device may perform the beam prediction based on the above first function. For example, a total number of beam pairs that the terminal originally needs to measure is M*N (in which M is the quantity of transmit beams of the base station, and N is the quantity of receiving beams of the terminal). Based on the first function, the quantity of beam pairs measured by the terminal may be reduced, while beam information of M*N beam pairs (such as information including beam quality, best beam, etc.) may still be predicted and output based on the first function.

For example, for spatial domain beam prediction, the terminal may only measure a part of the multiple beam pairs. For example, the beam pairs measured by the terminal may be 1/8, 1/4, etc. of the M*N beam pairs. A beam measurement quality of the part of the beam pairs obtained through the measurement serves as an input value of the above first function, and a corresponding output value may be predicted through the above first function. The output value may be beam information for the M*N beam pairs, such as a beam quality of at least one beam pair, and/or identifiers of K best beam pairs. The output value may also be beam information related to the M transmit beams of the base station, such as a beam quality of at least one transmit beam of the base station, and/or identifiers of K best transmit beams of the base station. The beam measurement quality may include the L1-RSRP and/or the L1-SINR. An identifier of the above beam pair may be a TxRx beam ID, and the Tx beam ID may be an identifier of a reference signal resource.

In some embodiments, the terminal and/or the network device may perform the beam prediction based on the above first function. For example, a total number of transmit beams of the base station that the terminal originally needs to measure is M. Based on the first function, the number of transmit beams of the base station measured by the terminal may be reduced, while beam information for the M transmit beams of the base station (such as information including beam quality, best beam, etc.) may still be predicted and output based on the first function.

For example, for the spatial domain beam prediction, the terminal may only measure a part of the multiple transmit beams of the base station. For example, the beams measured by the terminal may be 1/8, 1/4, etc. of the M beams. A beam measurement quality of the part of the beams obtained through the measurement serves as the input value of the above first function, and a corresponding output value may be predicted via the above first function. The output value may be the beam information related to the M transmit beams, such as a beam quality of at least one beam, and/or identifiers of K best beams. The beam measurement quality may include the L1-RSRP and/or the L1-SINR. An identifier of the above beam may be a Tx beam ID, and the Tx beam ID may be an identifier of a reference signal resource.

For another example, for time domain beam prediction, the terminal may measure a beam quality of beam pairs or transmit beams in a historical time instance to obtain a historical beam measurement quality. The historical beam measurement quality serves as the input value of the first function, and a corresponding output value is obtained through prediction by the first function. The output value may be beam information (such as information including beam quality, best beam, etc.) for a beam pair or a transmit beam of the base station in a future time instance. The beam measurement quality may include the L1-RSRP and/or the L1-SINR. The best beam may include an identifier of the best beam pair, the identifier of the beam pair may be a TxRx beam ID, and the Tx may be an identifier of the reference signal resource. The best beam may include a best beam identifier, and the beam identifier may be an identifier of a reference signal resource. The above transmit beams may be transmit beams sent by the base station to the terminal.

In some embodiments, a beam set of the terminal may include a first beam set setB and a second beam set setA.

The first beam set setB includes one or more first beams, and the first beam may be a beam corresponding to the input value of the first function. For example, the terminal may measure the first beams in the first beam set setB to obtain the beam measurement quality.

The second beam set setA includes one or more second beams, and the second beams may be beams corresponding to the output value of the first function.

In some embodiments, for the spatial domain beam prediction, the first function may predict measurement results of the second beams in the second beam set setA based on the measurement results of the first beams in the first beam set setB. For example, the terminal may measure the L1-RSRP and/or L1-SINR of the first beams in the setB, input the measured L1-RSRP and/or L1-SINR into the first function, and the first function may predict and output the L1-RSRP and/or L1-SINR of the second beams in the setA.

For spatial domain beam prediction, a relationship between the first beam set setB and the second beam set setA may include at least one of the following.

The setB may be a subset of the setA. For example, the setA includes 32 reference signal resources (one reference signal resource corresponds to one beam direction), and the setB includes N reference signal resources, where N < 32, for example, N=8.

The setB is different from the setA, beams corresponding to the setB are wide beams, and beams corresponding to setA are narrow beams. Optionally, beam coverage ranges of the setB and the setA may be the same or different. For example, the setA includes 32 reference signal resources, one reference signal resource corresponds to one beam direction, and a coverage range of the 32 reference signal resources is 120 degrees. The setB includes N reference signal resources, for example, N=8, and a coverage range of the N reference signal resources is also 120 degrees. That is, the beam directions of multiple reference signal resources in the setB cover the beam directions of multiple reference signal resources in the setA, which may also be understood as that 32/N reference signal resources in the setA are in a QCL Type D relationship with the same reference signal resource in the setB.

In some embodiments, for the time domain beam prediction, the first function may predict the measurement results of the second beams in the second beam set setA in the future time instance based on the measurement results of the first beams in the first beam set setB in the historical time instance. For example, the terminal may measure the L1-RSRP and/or L1-SINR of the first beams in the setB in the historical time instance, input the measured L1-RSRP and/or L1-SINR into the first function, and the first function may predict and output the L1-RSRP and/or L1-SINR of the second beams in the setA in the future time instance.

For the time domain beam prediction, a relationship between the first beam set setB and the second beam set setA may include at least one of the following.

The setB may be the subset of the setA.

The setB is different from the setA, the beams corresponding to the setB are wide beams, and the beams corresponding to the setA are narrow beams.

The setB is the same as the setA.

In some embodiments, the terminal and/or the network device may deploy one or more first functions. How to determine information required by the first function has become an urgent problem to be solved.

FIG. 2 is a schematic interactive diagram of a communication method according to an embodiment of the present disclosure. The method may be performed by the above communication system. As shown in FIG. 2, the method may include the following steps.

**In step S2101**, a network device sends first information to a terminal.

In some embodiments, the terminal may receive the first information. For example, the terminal may receive the first information sent by the network device.

In some embodiments, the first information may correspond to a first function. For example, the first information may indicate information required by the first function, the first function may be configured to perform beam prediction, and the first function may be an AI model and/or an AI function.

In some embodiments, the name of the first information is not specified, and may be, for example, "configuration information", "data configuration information", "function configuration information", "model configuration information" and the like.

In some embodiments, the information required by the first function may include data required by the first function, and/or information related to data collection, in which the data is the data required by the first function. Optionally, the name of data collection is not specified, and may be, for example, "data collection", "data acquisition", "information acquisition", "information collection" and the like.

In some embodiments, one AI function may correspond to one or more AI models. For example, one AI function may be a function or module implemented jointly by multiple AI models.

In other embodiments, one AI model may correspond to one or more AI functions.

In further embodiments, the AI function and the AI model may be in one-to-one correspondence.

In some embodiments, the information related to the data collection may include the data itself, and may also include related information for collecting the data, such as reference signal resource information for collecting the data.

In some embodiments, the terminal may determine the information required by the first function according to the first information.

In some embodiments, the terminal may obtain the data according to the first information.

In some embodiments, the data may include at least one of:
data for model training;
data for model inference; or
data for performance monitoring.

In some embodiments, terms such as "model training", "function training" and "AI model training" may be used interchangeably.

In some embodiments, terms such as "model inference", "function inference", "AI model inference", "model application", "function application" and "AI model application" may be used interchangeably.

In some embodiments, terms such as "performance monitoring", "performance evaluation", "performance collection", "performance detection" and "performance indicator collection" may be used interchangeably.

In some embodiments, terms such as "Artificial Intelligence (AI)", "Machine Learning (ML)", and "AI/ML" may be used interchangeably.

In some embodiments, the data for the model training may include data required for training the first function (the AI function and/or the AI model). For example, the data includes data required for a model input and data required for a model label. Optionally, the data required for the model label may be actual measurement data corresponding to an output of the first function.

For example, the data for the model inference may include data required for an input of the AI model.

In one implementation, the first information may include the data for the model training. For example, the data for the model training may be sent directly via the first information, and the terminal may directly collect the data for the model training via the first information.

In another implementation, the first information may include reference signal resource configuration information required for obtaining the data for the model training. For example, the terminal may perform a measurement according to the first information to collect the data for the model training. For example, the terminal may measure a reference signal corresponding to the reference signal resource configuration information indicated by the first information to collect the data for the model training.

In this way, the terminal may obtain the data for the model training, and train the first function according to the data, such that a training of the first function may be flexibly controlled.

In some embodiments, the data for the model inference may include data required in a case of performing the beam prediction or other model inference via the first function (the AI function and/or the AI model).

For example, the data for the model inference may include the data required for the input of the AI model. Optionally, the data for the model inference may be obtained by measuring the reference signal corresponding to the reference signal resource configuration information indicated by the first information. For example, the terminal may perform measurement according to the first information to obtain the data for the model inference. For example, the terminal may measure the reference signal corresponding to the reference signal resource configuration information indicated by the first information, to obtain the data for the model inference.

In this way, the terminal may obtain the data for the model inference, and perform the beam prediction or other model inference via the first function, such that the execution of the model inference on the first function may be flexibly controlled.

In some embodiments, the data for the performance monitoring may include: data for monitoring performance of the AI function of the first function, or data for monitoring performance of at least one AI model of the first function.

For example, the data for the performance monitoring may include: data required for model input, data collected from model output, and data required for the model label (for example, actual measurement data corresponding to the model output). Optionally, the data for the performance monitoring may be collected by measuring the reference signal corresponding to the reference signal resource configuration information indicated by the first information, and may also be collected according to the model output. For example, the terminal may perform measurement according to the first information to collect the data for the performance monitoring. For example, the terminal may measure the reference signal corresponding to the reference signal resource configuration information indicated by the first information, thereby collecting the data for the performance monitoring, such as collecting the data required for the model input and the data required for the model label. As another example, the terminal may perform the model inference to collect the data obtained from the model output.

In this way, the terminal may collect the data for the performance monitoring, compare an output of the first function with a label according to the data to obtain the performance of the first function, such that the performance monitoring on the first function may be flexibly controlled.

In some embodiments, the terminal may collect data required by the first function.

For example, the terminal may collect the data required by the first function according to the first information.

In some embodiments, the terminal may send second information to the network device.

Optionally, the second information may be a response message for the first information, configured for the network device to determine that the terminal has received the first information.

Optionally, the second information may be a data collection result. For example, after the terminal collects the data required by the first function according to the first information, it may send the second information to the network device to notify the network device of the data collection result. The network device may determine whether to instruct the terminal to stop the data collection according to the data collection result. For example, the data collection result is successful, the network device may instruct the terminal to stop the data collection through a third message. For another example, the data collection result is failure, the network device may not need to notify the terminal to stop the data collection.

In this way, the data collection of the terminal may be flexibly controlled.

In some embodiments, the first information may include at least one of:
a first identifier, in which the first identifier corresponds to the first function; or
a data collection purpose, in which the data collection purpose indicates a function of data obtained through the first information.

In other embodiments, the first information may include at least one of:
the first identifier, in which the first identifier corresponds to the first function;
a second identifier, in which the second identifier corresponds to a configuration related to a measurement, and the measurement is configured for the data collection;
beam information, in which the beam information indicates information related to beams for a measurement and/or prediction;
a use case, in which the use case is a case applying the first function to perform the beam prediction;
the reference signal resource information, in which the reference signal resource information is configured to determine a first beam and/or a second beam, the first beam is a beam corresponding to an input value of the first function, and the second beam is a beam corresponding to an output value of the first function;
coverage information, in which the coverage information indicates information related to a coverage of the network device;
terminal distribution information, in which the terminal distribution information indicates a distribution of a plurality of terminals within a coverage of the network device;
the data collection purpose, in which the data collection purpose indicates the function of the data obtained through the first information; or
measurement information, in which the measurement information includes information related to a measurement performed by the terminal based on the first information.

In this way, the terminal may determine the information required by the first function through at least one piece of the first information, to collect the data required by the first function, thereby improving the management efficiency of the first function.

In some embodiments, the terminal may have one or more first functions, and different first functions may correspond to the same or different first identifiers.

In some embodiments, the first identifier includes at least one of:
a function identifier (ID);
a model ID;
a dataset ID;
a data collection configuration ID;
a data collection ID;
a condition ID; or
an additional condition ID.

In one implementation, the data collection configuration ID may also be referred to as a data gathering configuration ID or a data acquisition configuration ID.

In one implementation, the data collection ID may also be referred to as a data gathering ID or a data acquisition ID.

In one implementation, the data is data for the model training, and the data may be directly sent by the network device to the terminal. For example, the network device may collect the data for the model training and send the data directly to the terminal. The terminal does not need to perform the measurement according to the reference signal resource configuration to obtain the data for the model training. In this case, the first identifier sent by the network device may include the dataset ID. In this way, the terminal may determine that the first function corresponding to the model trained based on the dataset ID #1 is a function #1 or a model #1.

In one implementation, the data is the data for the model training, and the data may be obtained by the terminal by measuring the reference signal corresponding to the reference signal resource configuration information sent by the network device. For example, the first identifier sent by the network device may include at least one identifier other than the dataset ID in the first identifier, which is configured to identify the first information corresponding to the first function. In this way, the terminal may determine that the first function corresponding to the model trained based on the first identifier #1 is a function #1 or a model #1.

In another implementation, the data is the data for the model inference or the performance monitoring, the first identifier includes the dataset ID, and the network device sends the reference signal resource configuration information to the terminal. Through the dataset ID, the terminal may determine which first function (the function #1 or the model #1) the reference signal resource configuration information is for the model inference or the performance monitoring. Since during a model training process, the terminal has already determined that the first function corresponding to the model trained based on the dataset ID #1 is the function #1 or the model #1, in a case where the network device indicates the dataset ID #1 to the terminal, the terminal determines that the first function corresponding to the dataset ID #1 is the function #1 or the model #1, and the terminal may determine that the current reference signal resource configuration information from the network device is for the model inference or the performance monitoring of the function #1 or the model #1.

In another implementation, the data is the data for the model inference or the performance monitoring, the first identifier includes at least one identifier other than the dataset ID, and the network device sends the reference signal resource configuration information to the terminal. Through the at least one identifier in the first identifier, the terminal may determine which first function (for example, the function #1 or the model #1) the data obtained by measuring the reference signal corresponding to the reference signal resource configuration information is for the model inference or the performance monitoring. Since during the model training process, the terminal has already determined that the first function corresponding to the model trained based on the first identifier #1 is the function #1 or the model #1, in a case where the network device indicates the first identifier #1 to the terminal, the terminal determines that the first function corresponding to the first identifier #1 is the function #1 or the model #1, and the terminal may determine that the current reference signal resource configuration information from the network device is for the model inference or the performance monitoring of the function #1 or the model #1.

In some embodiments, in response to at least one of the first identifiers being the same, the first information corresponds to the same first function.

For example, after the terminal performs the model training based on the first identifier to obtain a trained first function, in a case where the network device subsequently configures measurement and reporting of some reference signals, and indicates the first identifier, and the indicated data collection purpose is the performance monitoring and/or the model inference, the terminal determines that the data obtained through the measurement and configuration of the reference signals may be used for the performance monitoring and/or the model inference of the first function obtained by previous data training corresponding to the first identifier.

Optionally, in a case where the first identifiers are different, they may also correspond to the same first function. The terminal may independently determine a correspondence between the first function and the first identifier. For example, the terminal may perform training to obtain one first function based on multiple first identifiers, and thus the terminal may determine that the multiple first identifiers correspond to one first function, in which the first function is the AI function or the AI model.

Optionally, in a case where the first identifiers are different, they may also correspond to the same AI function and the same AI model. The terminal may determine a correspondence between the AI function or AI model and the first identifiers. For example, the terminal may perform training to obtain one AI function or one AI model based on the multiple first identifiers, and thus the terminal may determine that the multiple first identifiers correspond to one AI function or one AI model. For example, in a case where the first identifiers are different and the pieces of terminal distribution information are different, the terminal obtains a model through training that may be applied to different terminal distributions based on data corresponding to different first identifiers.

Optionally, in a case where the first identifiers are different, they may also correspond to the same AI function and different AI models. The terminal may determine the correspondence among the AI function, the AI model and the first identifier. For example, the terminal may perform training to obtain multiple AI models of one AI function based on the multiple first identifiers, and thus the terminal may determine that the multiple first identifiers correspond to one AI function and the multiple AI models. For example, in a case where the first identifiers are different and the pieces of terminal distribution information are different, the terminal trains different models suitable for different terminal distributions based on the data corresponding to different first identifiers, but corresponding to the same AI function. For example, for the corresponding first AI function, except for the first identifiers and the pieces of terminal distribution information, other pieces of information in the first information corresponding to the first AI function are the same. In a case where the pieces of the terminal distribution information are different, they correspond to different AI models corresponding the same AI function.

Optionally, in a case where the first identifiers are different, they may also correspond to different AI functions. The terminal may determine the correspondence between the AI functions and the first identifiers. For example, the terminal may perform training to obtain the multiple AI functions based on the multiple first identifiers, and thus the terminal may determine that the multiple first identifiers correspond to multiple AI functions, respectively. For example, in a case where the first identifiers are different and the use cases are different, for example, one use case is for spatial domain beam prediction, and another use case is for time domain beam prediction case, different AI models trained by the terminal based on the data corresponding to these two pieces of first information correspond to different AI functions.

In this way, the first function may be determined through the first identifier.

In some embodiments, the second identifier includes at least one of:
a measurement ID, in which the measurement ID may correspond to one measurement object and one report configuration;
a measurement object ID, in which the measurement object ID may be used to determine a measurement object; or
a report ID, in which the report ID may be used to determine a report configuration. Optionally, the report ID may also be referred to as a ReportConfigId.

In this way, the measurement object and the report configuration may be determined through the second identifier, such that the terminal may perform the measurement to collect the data.

In some embodiments, the beam information includes at least one of:
a beam codebook ID, in which the beam codebook ID may indicate codebook information used by the network device for sending a beam; optionally, the beam codebook ID may also be referred to as a gNB beam codebook ID;
an antenna configuration ID, in which the antenna configuration identifier indicates antenna configuration information of the network device; optionally, the antenna configuration ID may also be referred to as a gNB antenna configuration ID. The antenna configuration information may include at least one of a number of antenna panels, a number of antennas, a distance between antennas, and antenna array arrangement; or
a beam type, in which the beam type indicates a type of a beam sent by the network device.

In one implementation, the beam type may include at least one of: a discrete Fourier transform (DFT) beam or a non-DFT beam.

In some embodiments, the use case includes at least one of:
a spatial domain beam prediction case;
a time domain beam prediction case; or
a spatial domain beam prediction case and a time domain beam prediction case.

In some embodiments, the reference signal resource information includes at least one of:
a first reference signal resource set, in which reference signal resources in the first reference signal resource set correspond to the first beam, and the first beam is a beam corresponding to an input value of the first function;
a second reference signal resource set, in which reference signal resources in the second reference signal resource set correspond to the second beam, and the second beam is a beam corresponding to an output value of the first function;
a set relationship, in which the set relationship includes a relationship between a first reference signal resource set and a second reference signal resource set;
time information corresponding to a first reference signal resource set, in which the time information may be a time quantity value, for example, a number of historical measurement time instances;
time information corresponding to a second reference signal resource set, in which the time information may be a time quantity value, for example, a number of predicted future time instances; or
a time pattern, in which the time pattern is a pattern formed by a time instance corresponding to a first reference signal resource set and a time instance corresponding to a second reference signal resource set.

In one implementation, in a case where the use case is the spatial domain beam prediction case, the reference signal resource information includes at least one of the first reference signal resource set, the second reference signal resource set, or the set relationship.

In another implementation, in a case where the use case is the time domain beam prediction case, the reference signal resource information includes at least one of the first reference signal resource set, the second reference signal resource set, the set relationship, the time information corresponding to the first reference signal resource set, the time information corresponding to the second reference signal resource set, or the time pattern. For example, in a case where the use case is the time domain beam prediction case, the reference signal resource information may include the time information corresponding to the first reference signal resource set, the time information corresponding to the second reference signal resource set and the time pattern.

In some embodiments, the first reference signal resource set may include a quantity of first reference signal resources in the first reference signal resource set, and may further include at least one of a resource ID, a time-frequency resource, or a reference signal (RS) sequence corresponding to each of the first reference signal resources.

In some embodiments, the second reference signal resource set may include a quantity of second reference signal resources in the second reference signal resource set, and may further include at least one of a resource identifier, a time-frequency resource, and an RS sequence corresponding to each of the second reference signal resources.

In one implementation, the set relationship may include any one of:
the first reference signal resource set being a subset of the second reference signal resource set, for example, the second reference signal set may include M reference signal resources (each of the reference signal resources corresponds to a beam direction), for example, M=32, and the first reference signal resource set may include N reference signal resources, where N is smaller than M, for example, N=8, and M and N are each a positive integer;
the first reference signal resource set being different from the second reference signal resource set, in which a beam corresponding to the first reference signal resource set is a wide beam, and a beam corresponding to the second reference signal resource set is a narrow beam; optionally, beam coverage ranges corresponding to the first reference signal resource set and the second reference signal resource set may be the same or different; or
the first reference signal resource set being the same as the second reference signal resource set.

Optionally, for the spatial domain beam prediction, the set relationship may include any one of:
the first reference signal resource set being a subset of the second reference signal resource set; or
the first reference signal resource set being different from the second reference signal resource set, in which the beam corresponding to the first reference signal resource set is the wide beam, and the beam corresponding to the second reference signal resource set is the narrow beam.

Optionally, for the time domain beam prediction, the set relationship may include any one of:
the first reference signal resource set being the subset of the second reference signal resource set; or
the first reference signal resource set being different from the second reference signal resource set, in which the beam corresponding to the first reference signal resource set is the wide beam, and the beam corresponding to the second reference signal resource set is the narrow beam; or
the first reference signal resource set being the same as the second reference signal resource set.

In one implementation, the time pattern may include any one of:
a first pattern, in which the first pattern indicates N historical periods and M future periods, and measurement results of the N historical periods are used by the terminal to obtain prediction results of the M future periods based on the first function; or
a second pattern, in which the second pattern indicate K historical periods, and measurement results of the K historical periods are used by the terminal to obtain L prediction results within a (K+1)^{th} future period based on the first function.

FIG. 3 is a schematic diagram illustrating a first pattern according to an embodiment of the present disclosure. As shown in FIG. 3, based on a first pattern (pattern 1), a repeat pattern is formed by measurement results of N historical periods and prediction results of M future periods. It should be noted that a case where N=3 and M=2 is taken as an example in FIG. 3, N may be any positive integer, and M may also be any positive integer.

Optionally, in the first pattern, the historical periods and the future periods may be short periods, and the repeat pattern formed by the N historical periods and the M future periods may be a long period.

In some embodiments, the terminal may take the measurement results of the N historical periods as an input value of the first function, and obtain an output value predicted by the first function as the prediction results of the M future periods.

Optionally, within the M future periods, the network device may not send a reference signal for beam measurement. However, since measurement results of a beam within the M future periods are obtained through prediction and cannot be used as the input value of the first function, after the M periods, the network device may continue to send the reference signal for the beam measurement in the N historical periods within a second long period, and perform one repeat pattern.

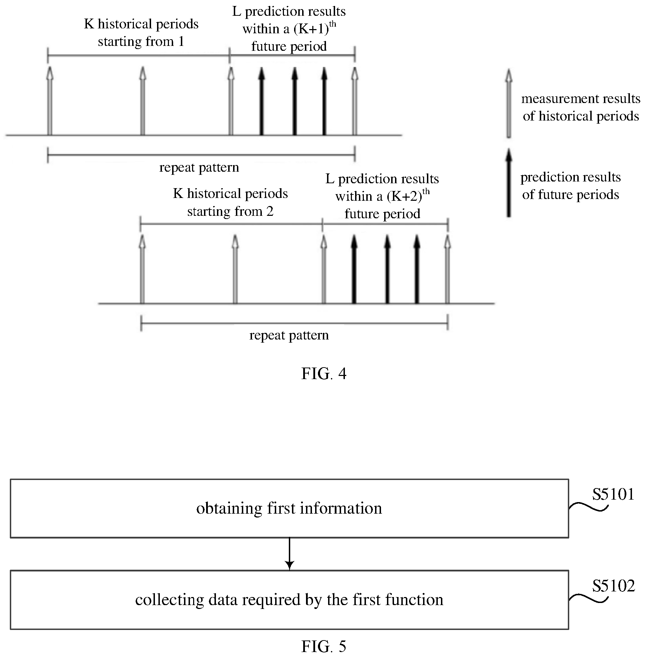

FIG. 4 is a schematic diagram illustrating a second pattern according to an embodiment of the present disclosure. As shown in FIG. 4, based on the second pattern (pattern 2), a repeat pattern is formed by measurement results of K historical periods and L prediction results within a (K+1)^{th} future period. It should be noted that a case where K=2 and L=3 is taken as an example in FIG. 4, K may be any positive integer, and L may also be any positive integer.

Optionally, in the second pattern, the historical periods and future period may be long periods, and the (K+1)^{th} future period may include L short periods, with one short period corresponding to one prediction result.

In some embodiments, the terminal may take the measurement results of K historical periods starting from 1 as an input value of the first function, and obtain an output value predicted by the first function as prediction results of the L short periods within the (K+1)^{th} future period. Optionally, the terminal may further take measurement results of K+1 historical periods starting from 2 as the input value of the first function, and obtain the output value predicted by the first function as the prediction results of the L short periods within a (K+2)^{th} future period.

Optionally, the network device may send a parameter signal for the beam measurement in each of the historical periods (long period), and the terminal may obtain the prediction result of each of the short periods through prediction. In this way, the repeat pattern of the second pattern may be simplified to a pattern where one long period contains multiple short periods.

In some embodiments, the coverage information includes a deployment type and/or an inter-site distance of the network device.

Optionally, the deployment type of the network device may be a deployment type of a base station. For example, the deployment type may be any one of: an urban macro base station, an urban micro base station, an indoor base station, a dense urban area, a rural area and a hotspot.

Optionally, the inter-site distance may represent the distance between adjacent base stations. For example, the inter-site distance (ISD) may be 100 meters, 200 meters, 500 meters or 1000 meters.

In some embodiments, the terminal distribution information includes a ratio of indoor UEs to outdoor UEs.

Optionally, the terminal distribution information may further include at least one of a proportion of indoor UEs, a proportion of outdoor UEs, or a quantity of terminals.

Optionally, the indoor UE may be a terminal located indoors (e.g., areas such as residential buildings, office buildings, shopping malls, etc.), and the outdoor UE may be a terminal located outdoors (e.g., areas such as streets, parks, etc.).

In some embodiments, the measurement information includes at least one of:
a measurement quantity, in which the measurement quantity includes L1-RSRP and/or L1-SINR;
event information, in which the event information is information related to an event that triggers a measurement reporting; or
a reporting quantity, in which the reporting quantity indicates information reported by the terminal to the network device.

In some embodiments, the event information may include at least one of:
an event ID; or
information such as a threshold and an offset of the event;
an event description, in which the event description may indicate a trigger condition for event reporting. For example, the event description may indicate that the event is reported in a case where a measured value (e.g., a performance metric) is higher than the threshold; for another example, the event description may indicate that the event is reported in a case where the measured value (e.g., the performance metric) is lower than a first threshold.

In some embodiments, the reporting quantity may include at least one of:
a resource set ID;
a resource ID, for example, the reporting quantity includes a model label: K strongest resource IDs;
the L1-RSRP, for example, the reporting quantity includes a model input: the resource ID and L1-RSRP corresponding to the resource ID, or only L1-RSRP corresponding to the resource ID;
the L1-SINR, for example, the reporting quantity includes a model input: the resource ID and L1-SINR corresponding to the resource ID, or only L1-SINR corresponding to the resource ID;
the performance metric, in which the performance metric may be a performance metric related to the first function;
the event ID; or
a determined function operation, in which the function operation may include operations such as activation, deactivation, fallback, etc., and the function operation may also be referred to as a model operation.

In some embodiments, the reporting quantity may include a performance metric of the first function, and the performance metric may include at least one of:
prediction accuracy, in which the prediction accuracy is a probability that predicted best reference signal resources include an actual best reference signal resource, the predicted best reference signal resources are best reference signal resources obtained through prediction by the first function, the actual best reference signal resource is a best reference signal resource obtained through an actual measurement by the terminal, and the best reference signal resources are top N reference signal resources with a maximum L1-RSRP or L1-SINR in a second reference signal resource set, in which N is a positive integer; or
a signal strength difference, in which the signal strength difference is a difference between a predicted signal strength and an actual signal strength.

In one implementation, the prediction accuracy may mean that identifiers of N best reference signal resource obtained through prediction by the first function include an identifier of an actual best reference signal resource. The identifier of the reference signal resource may be a synchronization signal block (SSB) identifier, a channel state information reference signal (CSI-RS) identifier, or a sounding reference signal (SRS) identifier, in which N is a positive integer, for example, N may be 1 or greater than 1.

Optionally, the probability may be a ratio between a quantity of times the predicted best reference signal resources include the actual best reference signal resource and a total quantity of predictions. For example, if 100 predictions are performed, among which the predicted best reference signal resources include the actual best reference signal resource for 90 times and does not include the actual best reference signal resource for 10 times, the probability is 90%, that is, the prediction accuracy is 90%.

Optionally, the predicted signal strength and actual signal strength may have multiple combination manners, as exemplified below.

In one implementation, the predicted signal strength is a predicted signal strength corresponding to the predicted best reference signal resource, and the actual signal strength is an actual signal strength corresponding to the actual best reference signal resource.

In one implementation, the predicted signal strength is an actual signal strength corresponding to the predicted best reference signal resource, and the actual signal strength is the actual measured signal strength corresponding to the actual best reference signal resource.

In another implementation, the predicted signal strength is the predicted signal strength corresponding to the predicted best reference signal resource, and the actual signal strength is the actual signal strength corresponding to the predicted best reference signal resource.

In yet another implementation, the predicted signal strength is a predicted signal strength corresponding to the actual best reference signal resource, and the actual signal strength is the actual signal strength corresponding to the actual best reference signal resource.

In one implementation, the signal strength difference may be a difference of the L1-RSRP, for example, a decibel (dB) difference of an average L1-RSRP.

For example, the signal strength difference may be a difference between an actual L1-RSRP corresponding to the identifier of the predicted best reference signal resource and an actual L1-RSRP corresponding to the identifier of the actual best reference signal resource.

For another example, the signal strength difference may be a difference between a predicted L1-RSRP corresponding to the identifier of the predicted best reference signal resource and an actual L1-RSRP corresponding to the identifier of the predicted best reference signal resource.

For another example, the signal strength difference may be a difference between the actual L1-RSRP corresponding to the identifier of the actual best reference signal resource and a predicted L1-RSRP corresponding to the identifier of the actual best reference signal resource.

For another example, the signal strength difference may be a difference between the predicted L1-RSRP corresponding to the identifier of the predicted best reference signal resource and the actual L1-RSRP corresponding to the identifier of the actual best reference signal resource.

In another implementation, the signal strength difference may be a difference of L1-SINR, for example, a dB difference of an average L1-SINR.

For example, the signal strength difference may be a difference between an actual L1-SINR corresponding to the identifier of the predicted best reference signal resource and an actual L1-SINR corresponding to the identifier of the actual best reference signal resource.

For another example, the signal strength difference may be a difference between a predicted L1-SINR corresponding to the identifier of the predicted best reference signal resource and the actual L1-SINR corresponding to the identifier of the predicted best reference signal resource.

For another example, the signal strength difference may be a difference between the actual L1-SINR corresponding to the identifier of the actual best reference signal resource and a predicted L1-SINR corresponding to the identifier of the actual best reference signal resource.

For another example, the signal strength difference may be a difference between the predicted L1-SINR corresponding to the identifier of the predicted best reference signal resource and the actual L1-SINR corresponding to the identifier of the actual best reference signal resource.

In this way, the performance metric of the first function may be determined through the prediction accuracy and/or the signal strength difference, thereby performing performance evaluation on the first function.

In some embodiments, the data collection purpose includes at least one of:
model training;
model inference; or
performance monitoring.

Optionally, the name of the "data collection purpose" is not limited, for example, it may be "data gathering purpose", "information acquisition purpose", "information gathering purpose", "data gathering function", "information acquisition function", "information gathering function" and the like.

In some embodiments, a content of first information corresponding to different data collection purposes is different or not completely the same.

For example, if the data collection purpose is the performance monitoring, the first information includes the event information, and the reporting quantity includes the performance metric. Conversely, if the data collection purpose is not the performance monitoring, such as the model training or the model inference, the first information does not include the event information, and the reporting quantity may not include the performance metric.

In this way, different first information may be determined according to different data collection purposes to instruct the terminal to collect different data for the first function, which improves the flexibility of data collection.

FIG. 5 is a schematic flowchart of a communication method according to an embodiment of the present disclosure. As shown in FIG. 5, an embodiment of the present disclosure relates to a communication method, which may be performed by a terminal. The method may include the following steps.

**In step S5101**, first information is obtained.

For optional implementations of step S5101, reference may be made to the optional implementations of step S2101 in FIG. 2 and other relevant parts in the embodiments related to FIG. 2.

In some embodiments, the terminal may receive the first information sent by a network device, which is not limited in the embodiments of the present disclosure. The terminal may also receive the first information sent by other entities.

In some embodiments, the terminal may obtain the first information specified by a protocol.

In some embodiments, the terminal may obtain the first information from an upper layer(s).

In some embodiments, the terminal may perform processing to obtain the first information.

**In step S5102**, data required by a first function is collected.

In some embodiments, the terminal may collect the data required by the first function according to the first information.

For example, the terminal may perform beam measurement according to the first information to collect input data of the first function and collect output data after prediction by the first function.

Optionally, step S5101 and step S5102 are optional steps. For example, the terminal may only perform step S5101, or may only perform step S5102.

In some embodiments, the first information corresponds to the first function, the first function is configured to perform beam prediction, and the first function is an AI model and/or an AI function.

In some embodiments, the first information includes at least one of:
a first identifier, in which the first identifier corresponds to the first function; or
a data collection purpose, in which the data collection purpose indicates a function of data obtained through the first information.

In some embodiments, the first information includes at least one of:
the first identifier, in which the first identifier corresponds to the first function;
a second identifier, in which the second identifier corresponds to a configuration related to a measurement, and the measurement is configured for data collection;
beam information, in which the beam information indicates information related to beams for a measurement and/or prediction;
a use case, in which the use case is a case applying the first function to perform the beam prediction;
reference signal resource information, in which the reference signal resource information is configured to determine a first beam and/or a second beam, the first beam is a beam corresponding to an input value of the first function, and the second beam is a beam corresponding to an output value of the first function;
coverage information, in which the coverage information indicates information related to a coverage of the network device;
terminal distribution information, in which the terminal distribution information indicates a distribution of a plurality of terminals within a coverage of the network device;
the data collection purpose, in which the data collection purpose indicates a function of data obtained through the first information; or
measurement information, in which the measurement information includes information related to a measurement performed by the terminal based on the first information.

In some embodiments, the use case includes at least one of:
a spatial domain beam prediction case;
a time domain beam prediction case; or
a spatial domain beam prediction case and a time domain beam prediction case.

In some embodiments, the reference signal resource information includes at least one of:
a first reference signal resource set, in which reference signal resources in the first reference signal resource set correspond to the first beam;
a second reference signal resource set, in which reference signal resources in the second reference signal resource set correspond to the second beam;
a set relationship, in which the set relationship includes a relationship between a first reference signal resource set and a second reference signal resource set;
time information corresponding to a first reference signal resource set;
time information corresponding to a second reference signal resource set; or
a time pattern, in which the time pattern is a pattern formed by a time instance corresponding to a first reference signal resource set and a time instance corresponding to a second reference signal resource set.

In some embodiments, the set relationship includes:
the first reference signal resource set being a subset of the second reference signal resource set;
the first reference signal resource set being different from the second reference signal resource set, in which a beam corresponding to the first reference signal resource set is a wide beam, and a beam corresponding to the second reference signal resource set is a narrow beam; or
the first reference signal resource set being the same as the second reference signal resource set.

In some embodiments, the time pattern includes:
a first pattern, in which the first pattern indicates N historical periods and M future periods, and measurement results of the N historical periods are used by the terminal to obtain prediction results of the M future periods based on the first function; or
a second pattern, in which the second pattern indicate K historical periods, and measurement results of the K historical periods are used by the terminal to obtain L prediction results within a (K+1)^{th} future period based on the first function.

In some embodiments, the coverage information includes a deployment type and/or an inter-site distance of the network device; and/or
the terminal distribution information includes a ratio of indoor terminals to outdoor terminals.

In some embodiments, the measurement information includes at least one of:
a measurement quantity, in which the measurement quantity includes L1-RSRP and/or L1-SINR;
event information, in which the event information is information related to an event that triggers a measurement reporting; or
a reporting quantity, in which the reporting quantity indicates information reported by the terminal to the network device.

In some embodiments, the reporting quantity includes a performance metric of the first function, and the performance metric includes:
prediction accuracy, in which the prediction accuracy is a probability that predicted best reference signal resources include an actual best reference signal resource, the predicted best reference signal resources are best reference signal resources obtained through prediction by the first function, the actual best reference signal resource is a best reference signal resource obtained through an actual measurement by the terminal, and the best reference signal resources are top N reference signal resources with a maximum L1-RSRP or L1-SINR in a second reference signal resource set, in which N is a positive integer; and
a signal strength difference, in which the signal strength difference is a difference between a predicted signal strength and an actual signal strength.

In some embodiments, the first identifier includes at least one of:
a function identifier;
a model identifier;
a dataset identifier;
a data collection configuration identifier;
a data collection identifier;
a condition identifier; or
an additional condition identifier

In some embodiments, in response to at least one of the first identifiers being the same, the first information corresponds to the same first function.

In some embodiments, the second identifier includes at least one of:
a measurement identifier;
a measurement object identifier; or
a report identifier.

In some embodiments, the beam information includes at least one of:
a beam codebook identifier, in which the beam codebook identifier indicates codebook information used by the network device for sending a beam;
an antenna configuration identifier, in which the antenna configuration identifier indicates antenna configuration information of the network device; or
a beam type, in which the beam type indicates a type of a beam sent by the network device.

In some embodiments, the data collection purpose includes at least one of:
model training;
model inference; or
performance monitoring.

In some embodiments, different contents of the first information correspond to different data collection purposes, respectively.

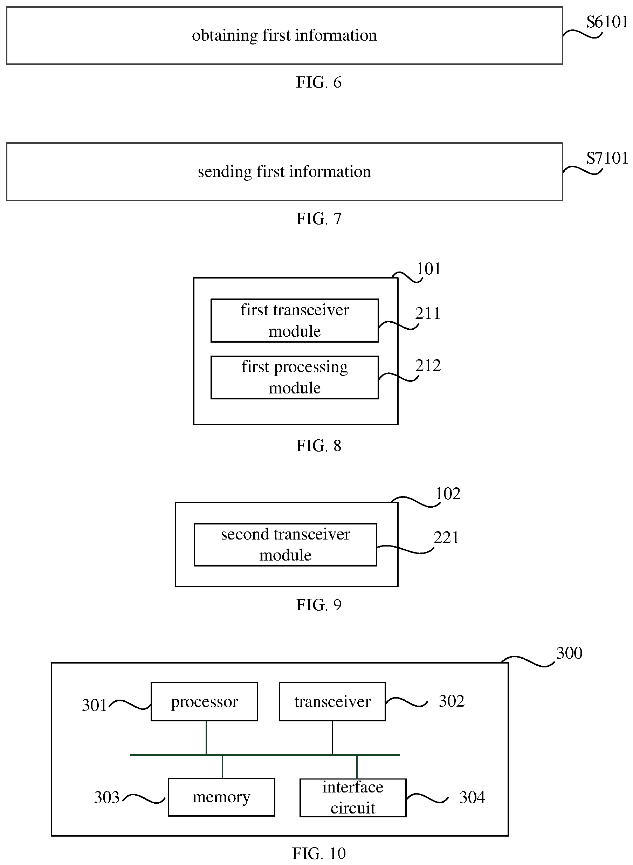

FIG. 6 is a schematic flowchart of a communication method according to an embodiment of the present disclosure. As shown in FIG. 6, an embodiment of the present disclosure relates to a communication method, which may be performed by a terminal. The method may include the following steps.

I**n step S6101**, first information is obtained.

For optional implementations of step S6101, reference may be made to the optional implementations of step S2101 in FIG. 2 and other relevant parts in the embodiments related to FIG. 2.

In some embodiments, the terminal may receive the first information sent by a network device, which is not limited in the embodiments of the present disclosure. The terminal may also receive the first information sent by other entities.

FIG. 7 is a schematic flowchart of a communication method according to an embodiment of the present disclosure. As shown in FIG. 7, an embodiment of the present disclosure relates to a communication method, which may be performed by a network device. The method may include the following steps.

**In step S7101**, first information is sent.

For optional implementations of step S7101, reference may be made to the optional implementations of step S2101 in FIG. 2 and other relevant parts in the embodiments related to FIG. 2.

In some embodiments, the network device may send the first information to a terminal, which is not limited in the embodiments of the present disclosure. The network device may also send the first information to other entities.

In some embodiments, the first information corresponds to a first function, the first function is configured to perform beam prediction, and the first function is an AI model and/or an AI function.

In some embodiments, the first information includes at least one of:
a first identifier, in which the first identifier corresponds to the first function;
a second identifier, in which the second identifier corresponds to a configuration related to a measurement, and the measurement is configured for data collection;
beam information, in which the beam information indicates information related to beams for a measurement and/or prediction;
a use case, in which the use case is a case applying the first function to perform the beam prediction;
reference signal resource information, in which the reference signal resource information is configured to determine a first beam and/or a second beam, the first beam is a beam corresponding to an input value of the first function, and the second beam is a beam corresponding to an output value of the first function;
coverage information, in which the coverage information indicates information related to a coverage of the network device;
terminal distribution information, in which the terminal distribution information indicates a distribution of a plurality of terminals within a coverage of the network device;
a data collection purpose, in which the data collection purpose indicates a function of data obtained through the first information; or
measurement information, in which the measurement information includes information related to a measurement performed by the terminal based on the first information.

In some embodiments, the use case includes at least one of:
a spatial domain beam prediction case;
a time domain beam prediction case; or
a spatial domain beam prediction case and a time domain beam prediction case.

In some embodiments, the reference signal resource information includes at least one of:
a first reference signal resource set, in which reference signal resources in the first reference signal resource set correspond to the first beam;
a second reference signal resource set, in which reference signal resources in the second reference signal resource set correspond to the second beam;
a set relationship, in which the set relationship includes a relationship between a first reference signal resource set and a second reference signal resource set;
time information corresponding to a first reference signal resource set;
time information corresponding to a second reference signal resource set; or
a time pattern, in which the time pattern is a pattern formed by a time instance corresponding to a first reference signal resource set and a time instance corresponding to a second reference signal resource set.

In some embodiments, the set relationship includes:
the first reference signal resource set being a subset of the second reference signal resource set;
the first reference signal resource set being different from the second reference signal resource set, in which a beam corresponding to the first reference signal resource set is a wide beam, and a beam corresponding to the second reference signal resource set is a narrow beam; or
the first reference signal resource set being the same as the second reference signal resource set.

In some embodiments, the time pattern includes:
a first pattern, in which the first pattern indicates N historical periods and M future periods, and measurement results of the N historical periods are used by the terminal to obtain prediction results of the M future periods based on the first function; or
a second pattern, in which the second pattern indicate K historical periods, and measurement results of the K historical periods are used by the terminal to obtain L prediction results within a (K+1)^{th} future period based on the first function.

In some embodiments, the coverage information includes a deployment type and/or an inter-site distance of the network device; and/or
the terminal distribution information includes a ratio of indoor terminals to outdoor terminals.

In some embodiments, the measurement information includes at least one of:
a measurement quantity, in which the measurement quantity includes L1-RSRP and/or L1-SINR;
event information, in which the event information is information related to an event that triggers a measurement reporting; or
a reporting quantity, in which the reporting quantity indicates information reported by the terminal to the network device.

In some embodiments, the reporting quantity includes a performance metric of the first function, and the performance metric includes:
prediction accuracy, in which the prediction accuracy is a probability that predicted best reference signal resources include an actual best reference signal resource, the predicted best reference signal resources are best reference signal resources obtained through prediction by the first function, the actual best reference signal resource is a best reference signal resource obtained through an actual measurement by the terminal, and the best reference signal resources are top N reference signal resources with a maximum L1-RSRP or L1-SINR in a second reference signal resource set, in which N is a positive integer; and
a signal strength difference, in which the signal strength difference is a difference between a predicted signal strength and an actual signal strength.

In some embodiments, the first identifier includes at least one of:
a function identifier;
a model identifier;
a dataset identifier;
a data collection configuration identifier;
a data collection identifier;
a condition identifier; or
an additional condition identifier

In some embodiments, in response to at least one of the first identifiers being the same, the first information corresponds to the same first function.

In some embodiments, the second identifier includes at least one of:
a measurement identifier;
a measurement object identifier; or
a report identifier.

In some embodiments, the beam information includes at least one of:
a beam codebook identifier, in which the beam codebook identifier indicates codebook information used by the network device for sending a beam;
an antenna configuration identifier, in which the antenna configuration identifier indicates antenna configuration information of the network device; or
a beam type, in which the beam type indicates a type of a beam sent by the network device.

In some embodiments, the data collection purpose includes at least one of:
model training;
model inference; or
performance monitoring.

In some embodiments, different contents of the first information correspond to different data collection purposes, respectively.

In some embodiments of the present disclosure, a communication system is provided. The communication system may include a terminal and a network device, in which the terminal may be configured to perform the communication method performed by the terminal in the above embodiments of the present disclosure; the network device may be configured to perform the communication method performed by the network device in the above embodiments of the present disclosure.

Embodiments of the present disclosure also provide a device for implementing any of the above methods, for example, a device including units or modules for implementing the steps performed by the terminal in any of the above methods. For another example, another device is also provided, which includes units or modules for implementing the steps performed by the network device (such as an access network device, a core network function node, a core network device and the like) in any of the above methods.

It should be understood that the division of each unit or module in the above device is only a division of logical functions, which may be fully or partially integrated into a physical entity or physically separated in actual implementation. Moreover, the units or modules in the device may be implemented in the form of calling software by a processor: for example, the device includes a processor, which is connected with a memory, and instructions are stored in the memory, and the processor calls the instructions stored in the memory to implement any of the above methods or implement the functions of the units or modules of the device, in which the processor is a general-purpose processor, such as a central processing unit (CPU) or a microprocessor, and the memory is a memory in the device or a memory outside the device. Alternatively, the units or modules in the device may be implemented in the form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above device may be implemented entirely in the form of calling software by the processor, or entirely in the form of hardware circuits, or partially in the form of calling software by a processor, and the rest is implemented in the form of hardware circuits.

In embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

FIG. 8 is a block diagram of a terminal according to an embodiment of the present disclosure. As shown in FIG. 8, the terminal 101 may include a first transceiver module 211 and/or a first processing module 212.

In some embodiments, the first transceiver module 211 is configured to receive first information sent by a network device, in which the first information corresponds to a first function, the first function is configured to perform beam prediction, and the first function is an AI model and/or an AI function.

In some embodiments, the first processing module 212 is configured to collect data required by the first function according to the first information.

In some embodiments, the first information includes at least one of:
a first identifier, in which the first identifier corresponds to the first function, and the first identifier includes at least one of a function identifier, a model identifier, a dataset identifier, a data collection configuration identifier, a data collection identifier, a condition identifier, or an additional condition identifier; or a data collection purpose, in which the data collection purpose includes at least one of model training, model inference, or performance monitoring, and different contents of the first information corresponding to different data collection purposes, respectively.

In some embodiments, for the specific implementation of the first information, reference may be made to the descriptions in the above embodiments of the present disclosure, which will not be repeated herein.

In some embodiments, the first transceiver module 211 may include a sending module and/or a receiving module, which may be separate or integrated.

In some embodiments, the first processing module may be a single module, or may include multiple sub-modules. Optionally, the multiple sub-modules respectively perform all or part of the steps that need to be performed by the first processing module. Optionally, terms such as first processing module and first processor may be used interchangeably.

FIG. 9 is a block diagram of a network device according to an embodiment of the present disclosure. As shown in FIG. 9, the network device 102 may include a second transceiver module 221.

In some embodiments, the second transceiver module 221 is configured to send first information to a terminal, in which the first information corresponds to a first function, the first function is configured to perform beam prediction, the first function is an AI model and/or an AI function, and the first information is configured to instruct the terminal to collect data required by the first function according to the first information, in which the first information includes at least one of: a first identifier, in which the first identifier corresponds to the first function, and the first identifier includes at least one of a function identifier, a model identifier, a dataset identifier, a data collection configuration identifier, a data collection identifier, a condition identifier, or an additional condition identifier; or a data collection purpose, in which the data collection purpose includes at least one of model training, model inference, or performance monitoring, and different contents of the first information corresponding to different data collection purposes, respectively.

In some embodiments, for the specific implementation of the first information, reference may be made to the descriptions in the above embodiments of the present disclosure, which will not be repeated herein.

In some embodiments, the second transceiver module 221 may include a sending module and/or a receiving module, which may be separate or integrated.

In some embodiments, the network device may further include a second processing module. The second processing module may be a single module, or may include multiple sub-modules. Optionally, the multiple sub-modules respectively perform all or part of the steps that need to be performed by the second processing module. Optionally, terms such as second processing module and second processor may be used interchangeably.

FIG. 10 is a block diagram illustrating a communication device 300 provided in embodiments of the present disclosure. The communication device 300 may be a network device (e.g., an access network device, a core network device, etc.), or may be a terminal (e.g., a user equipment, etc.), or may be a chip, a chip system, or a processor supporting the network device to implement any of the above methods, or may be a chip, a chip system, or a processor supporting the terminal to implement any of the above methods. The communication device 300 may be used to implement the method described in the above-mentioned method embodiments, for details, reference may be made to the description in the above-mentioned method embodiments.

As shown in FIG. 10, the communication device 300 includes one or more processors 301. The processor 301 may be a general-purpose processor or a special-purpose processor, for example, a baseband processor or a central processing unit. The baseband processor may be used to process communication protocols and communication data, and the central processor may be used to control communication devices (such as a base station, a baseband chip, a terminal, a terminal chips, a DU or a CU, etc.), execute programs, and process program data. Optionally, the communication device 300 is configured to perform any of the above methods. Optionally, one or more processors 301 are configured to invoke instructions to cause the communication device 300 to perform any of the above methods.

In some embodiments, the communication device 300 further includes one or more transceivers 302. In a case where the communication device 300 includes one or more transceivers 302, communication steps (for example, step S2101) such as sending and receiving in the above methods are performed by the transceiver 302, and other steps may be performed by the processor 301.

In some embodiments, the transceiver may include a receiver and/or a transmitter, which may be separate or integrated. Optionally, terms such as transceiver, transceiver unit, transceiving machine, transceiver circuit, interface circuit, interface and the like may be used interchangeably, and terms such as transmitter, transmitting unit, transmitting machine, transmitting circuit and the like may be used interchangeably, and terms such as receiver, receiving unit, receiving machine, receiving circuit and the like may be used interchangeably.

In some embodiments, the communication device 300 further includes one or more memories 303 for storing data. Optionally, all or part of the memories 303 may also be located outside the communication device 300. In an optional embodiment, the communication device 300 may include one or more interface circuits 304. Optionally, the interface circuit 304 is connected to the memory 303. The interface circuit 304 may be used to receive signals from the memory 303 or other devices, and may be used to send signals to the memory 303 or other devices. For example, the interface circuit 304 may read instructions stored in the memory 303 and send the instructions to the processor 301.

The communication device 300 described in the above embodiments may be a network device or a terminal device, but the scope of the communication device 300 described in the present disclosure is not limited thereto. The structure of the communication device 300 may not be limited by FIG. 10. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

Embodiments of the present disclosure further provide a chip, in which the chip includes one or more processors, and the chip may be configured to perform any of the above methods.

In some embodiments, the chip further includes one or more interface circuits. Optionally, terms such as interface circuit, interface, transceiver pin and the like may be used interchangeably. In some embodiments, the chip further includes one or more memories for storing data. Optionally, all or part of the memory may be outside the chip.

Optionally, the interface circuit is connected to the memory. The interface circuit may be configured to receive data from the memory or other devices, and the interface circuit may be configured to send data to the memory or other devices. For example, the interface circuit may read data stored in the memory, and send the data to the processor.

In some embodiments, the interface circuit is configured to perform at least one of communication steps such as sending and/or receiving in the above method (for example, step S2101). The interface circuit performing communication steps such as sending and/or receiving in the above method refers to: the interface circuit performs data interaction between the processor, the chip, the memory, or the transceiver device. In some embodiments, the processor is configured to perform other steps.

The modules and devices described in the various embodiments of virtual devices, physical devices, chips, and the like may be arbitrarily combined or separated as needed. Optionally, some or all steps may also be performed collaboratively by multiple modules and/or devices, which is not limited in embodiments of the present disclosure.

The present disclosure further provides a storage medium on which instructions are stored, which, when executed on the communication device, cause the communication device to perform any of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a temporary storage medium.

The present disclosure further provides a program product which, when executed by the communication device, causes the communication device to perform any of the above methods. Optionally, the program product is a computer program product.

The present disclosure further provides a computer program that, when run on a computer, causes the computer to perform any of the above methods.

## Claims

1. A communication method, performed by a terminal, comprising:
receiving first information sent by a network device, wherein the first information corresponds to a first function, the first function is configured to perform beam prediction, and the first function is an artificial intelligence (AI) model and/or an AI function; and
collecting data required by the first function according to the first information, wherein the first information comprises at least one of:
a first identifier, wherein the first identifier corresponds to the first function, and the first identifier comprises at least one of a function identifier, a model identifier, a dataset identifier, a data collection configuration identifier, a data collection identifier, a condition identifier, or an additional condition identifier; or
a data collection purpose, wherein the data collection purpose comprises at least one of model training, model inference, or performance monitoring, and different contents of the first information correspond to different data collection purposes, respectively.

2. The method according to claim 1, wherein the first information further comprises at least one of:
a second identifier, wherein the second identifier corresponds to a configuration related to a measurement, and the measurement is configured for data collection;
beam information, wherein the beam information indicates information related to beams for a measurement and/or prediction;
a use case, wherein the use case is a case applying the first function to perform the beam prediction;
reference signal resource information, wherein the reference signal resource information is configured to determine a first beam and/or a second beam, the first beam is a beam corresponding to an input value of the first function, and the second beam is a beam corresponding to an output value of the first function;
coverage information, wherein the coverage information indicates information related to a coverage of the network device;
terminal distribution information, wherein the terminal distribution information indicates a distribution of a plurality of terminals within a coverage of the network device; or
measurement information, wherein the measurement information comprises information related to a measurement performed by the terminal based on the first information.

3. The method according to claim 2, wherein the use case comprises at least one of:
a spatial domain beam prediction case;
a time domain beam prediction case; or
a spatial domain beam prediction case and a time domain beam prediction case.

4. The method according to claim 2, wherein the reference signal resource information comprises at least one of:
a first reference signal resource set, wherein reference signal resources in the first reference signal resource set correspond to the first beam;
a second reference signal resource set, wherein reference signal resources in the second reference signal resource set correspond to the second beam;
a set relationship, wherein the set relationship comprises a relationship between a first reference signal resource set and a second reference signal resource set;
time information corresponding to a first reference signal resource set;
time information corresponding to a second reference signal resource set; or
a time pattern, wherein the time pattern is a pattern formed by a time instance corresponding to a first reference signal resource set and a time instance corresponding to a second reference signal resource set.

5. The method according to claim 4, wherein the set relationship comprises:
the first reference signal resource set being a subset of the second reference signal resource set;
the first reference signal resource set being different from the second reference signal resource set, wherein a beam corresponding to the first reference signal resource set is a wide beam, and a beam corresponding to the second reference signal resource set is a narrow beam; or
the first reference signal resource set being the same as the second reference signal resource set.

6. The method according to claim 4, wherein the time pattern comprises:
a first pattern, wherein the first pattern indicates N historical periods and M future periods, and measurement results of the N historical periods are used by the terminal to obtain prediction results of the M future periods based on the first function; or
a second pattern, wherein the second pattern indicate K historical periods, and measurement results of the K historical periods are used by the terminal to obtain L prediction results within a (K+1)^{th} future period based on the first function.

7. The method according to claim 2, wherein the coverage information comprises a deployment type and/or an inter-site distance of the network device; and/or
the terminal distribution information comprises a ratio of indoor terminals to outdoor terminals.

8. The method according to claim 2, wherein the measurement information comprises at least one of:
a measurement quantity, wherein the measurement quantity comprises layer 1 reference signal received power (L1-RSRP) and/or layer 1 signal to interference plus noise ratio (L1-SINR);
event information, wherein the event information is information related to an event that triggers a measurement reporting; or
a reporting quantity, wherein the reporting quantity indicates information reported by the terminal to the network device.

9. The method according to claim 8, wherein the reporting quantity comprises a performance metric of the first function, and the performance metric comprises at least one of:
prediction accuracy, wherein the prediction accuracy is a probability that predicted best reference signal resources comprise an actual best reference signal resource, the predicted best reference signal resources are best reference signal resources obtained through prediction by the first function, the actual best reference signal resource is a best reference signal resource obtained through an actual measurement by the terminal, and the best reference signal resources are top N reference signal resources with a maximum L1-RSRP or L1-SINR in a second reference signal resource set, wherein N is a positive integer; or
a signal strength difference, wherein the signal strength difference is a difference between a predicted signal strength and an actual signal strength.

10. The method according to claim 2, wherein the second identifier comprises at least one of:
a measurement identifier;
a measurement object identifier; or
a report identifier.

11. The method according to claim 2, wherein the beam information comprises at least one of:
a beam codebook identifier, wherein the beam codebook identifier indicates codebook information used by the network device for sending a beam;
an antenna configuration identifier, wherein the antenna configuration identifier indicates antenna configuration information of the network device; or
a beam type, wherein the beam type indicates a type of a beam sent by the network device.

12. The method according to any one of claims 1 to 11, wherein in response to at least one of the first identifiers being the same, the first information corresponds to the same first function.

13. A communication method, performed by a network device, comprising:
sending first information to a terminal, wherein the first information corresponds to a first function, the first function is configured to perform beam prediction, the first function is an artificial intelligence (AI) model and/or an AI function, and the first information is configured to instruct the terminal to collect data required by the first function according to the first information,
wherein the first information comprises at least one of:
a first identifier, wherein the first identifier corresponds to the first function, and the first identifier comprises at least one of a function identifier, a model identifier, a dataset identifier, a data collection configuration identifier, a data collection identifier, a condition identifier, or an additional condition identifier; or
a data collection purpose, wherein the data collection purpose comprises at least one of model training, model inference, or performance monitoring, and different contents of the first information correspond to different data collection purposes, respectively.

14. The method according to claim 13, wherein the first information comprises at least one of:
the first identifier, wherein the first identifier corresponds to the first function;
a second identifier, wherein the second identifier corresponds to a configuration related to a measurement, and the measurement is configured for data collection;
beam information, wherein the beam information indicates information related to beams for a measurement and/or prediction;
a use case, wherein the use case is a case applying the first function to perform the beam prediction;
reference signal resource information, wherein the reference signal resource information is configured to determine a first beam and/or a second beam, the first beam is a beam corresponding to an input value of the first function, and the second beam is a beam corresponding to an output value of the first function;
coverage information, wherein the coverage information indicates information related to a coverage of the network device;
terminal distribution information, wherein the terminal distribution information indicates a distribution of a plurality of terminals within a coverage of the network device;
the data collection purpose, wherein the data collection purpose indicates a function of data obtained through the first information; or
measurement information, wherein the measurement information comprises information related to a measurement performed by the terminal based on the first information.

15. The method according to claim 14, wherein the use case comprises at least one of:
a spatial domain beam prediction case;
a time domain beam prediction case; or
a spatial domain beam prediction case and a time domain beam prediction case.

16. The method according to claim 14, wherein the reference signal resource information comprises at least one of:
a first reference signal resource set, wherein reference signal resources in the first reference signal resource set correspond to the first beam;
a second reference signal resource set, wherein reference signal resources in the second reference signal resource set correspond to the second beam;
a set relationship, wherein the set relationship comprises a relationship between a first reference signal resource set and a second reference signal resource set;
time information corresponding to a first reference signal resource set;
time information corresponding to a second reference signal resource set; or
a time pattern, wherein the time pattern is a pattern formed by a time instance corresponding to a first reference signal resource set and a time instance corresponding to a second reference signal resource set.

17. The method according to claim 16, wherein the set relationship comprises:
the first reference signal resource set being a subset of the second reference signal resource set;
the first reference signal resource set being different from the second reference signal resource set, wherein a beam corresponding to the first reference signal resource set is a wide beam, and a beam corresponding to the second reference signal resource set is a narrow beam; or
the first reference signal resource set being the same as the second reference signal resource set.

18. The method according to claim 16, wherein the time pattern comprises:
a first pattern, wherein the first pattern indicates N historical periods and M future periods, and measurement results of the N historical periods are used by the terminal to obtain prediction results of the M future periods based on the first function; or
a second pattern, wherein the second pattern indicate K historical periods, and measurement results of the K historical periods are used by the terminal to obtain L prediction results within a (K+1)^{th} future period based on the first function.

19. The method according to claim 14, wherein the coverage information comprises a deployment type and/or an inter-site distance of the network device; and/or
the terminal distribution information comprises a ratio of indoor terminals to outdoor terminals.

20. The method according to claim 14, wherein the measurement information comprises at least one of:
a measurement quantity, wherein the measurement quantity comprises layer 1 reference signal received power (L1-RSRP) and/or layer 1 signal to interference plus noise ratio (L1-SINR);
event information, wherein the event information is information related to an event that triggers a measurement reporting; or
a reporting quantity, wherein the reporting quantity indicates information reported by the terminal to the network device.

21. The method according to claim 20, wherein the reporting quantity comprises a performance metric of the first function, and the performance metric comprises:
prediction accuracy, wherein the prediction accuracy is a probability that predicted best reference signal resources comprise an actual best reference signal resource, the predicted best reference signal resources are best reference signal resources obtained through prediction by the first function, the actual best reference signal resource is a best reference signal resource obtained through an actual measurement by the terminal, and the best reference signal resources are top N reference signal resources with a maximum L1-RSRP or L1-SINR in a second reference signal resource set, wherein N is a positive integer; and
a signal strength difference, wherein the signal strength difference is a difference between a predicted signal strength and an actual signal strength.

22. The method according to claim 14, wherein the second identifier comprises at least one of:
a measurement identifier;
a measurement object identifier; or
a report identifier.

23. The method according to claim 14, wherein the beam information comprises at least one of:
a beam codebook identifier, wherein the beam codebook identifier indicates codebook information used by the network device for sending a beam;
an antenna configuration identifier, wherein the antenna configuration identifier indicates antenna configuration information of the network device; or
a beam type, wherein the beam type indicates a type of a beam sent by the network device.

24. The method according to any one of claims 13 to 23, wherein in response to at least one of the first identifiers being the same, the first information corresponds to the same first function.

25. A terminal, comprising:
a first transceiver module, configured to receive first information sent by a network device, wherein the first information corresponds to a first function, the first function is configured to perform beam prediction, and the first function is an artificial intelligence (AI) model and/or an AI function; and
a first processing module, configured to collect data required by the first function according to the first information, wherein the first information comprises at least one of:
a first identifier, wherein the first identifier corresponds to the first function, and the first identifier comprises at least one of a function identifier, a model identifier, a dataset identifier, a data collection configuration identifier, a data collection identifier, a condition identifier, or an additional condition identifier; or
a data collection purpose, wherein the data collection purpose comprises at least one of model training, model inference, or performance monitoring, and different contents of the first information corresponding to different data collection purposes, respectively.

26. A network device, comprising:
a second transceiver module, configured to send first information to a terminal, wherein the first information corresponds to a first function, the first function is configured to perform beam prediction, the first function is an artificial intelligence (AI) model and/or an AI function, and the first information is configured to instruct the terminal to collect data required by the first function according to the first information,
wherein the first information comprises at least one of:
a first identifier, wherein the first identifier corresponds to the first function, and the first identifier comprises at least one of a function identifier, a model identifier, a dataset identifier, a data collection configuration identifier, a data collection identifier, a condition identifier, or an additional condition identifier; or
a data collection purpose, wherein the data collection purpose comprises at least one of model training, model inference, or performance monitoring, and different contents of the first information corresponding to different data collection purposes, respectively.

27. A communication device, comprising:
one or more processors,
wherein the communication device is configured to perform the communication method according to any one of claims 1 to 12 or claims 13 to 24.

28. A storage medium storing instructions that, when executed on a communication device, cause the communication device to perform the communication method according to any one of claims 1 to 12 or claims 13 to 24.

29. A communication system, comprising a terminal and a network device, wherein the terminal is configured to implement the communication method according to any one of claims 1 to 12; and the network device is configured to implement the communication method according to any one of claims 13 to 24.
